Europäisches Patentamt

**European Patent Office** (11) Publication number: **0 048 578**

Office européen des brevets A2

(12) **EUROPEAN PATENT APPLICATION**

(21) Application number: **81304190.2** (51) Int. Cl.³: **B 23 B 31/04**
                                         **B 23 B 31/20**
(22) Date of filing: **14.09.81**

(30) Priority: **19.09.80 GB 8030309**
**13.01.81 GB 8100925**
**05.02.81 GB 8103547**

(43) Date of publication of application:
**31.03.82 Bulletin 82/13**

(84) Designated Contracting States:
**AT BE CH DE FR GB IT LI LU NL SE**

(71) Applicant: **S.A.T. Tooling Systems Limited**
**Brindley Road Bayton Industrial Estate**
**Exhall Coventry West Midlands(GB)**

(72) Inventor: **Hunt, Geoffrey John**
**5 Whitelaw Crescent Allesley Village**
**Coventry West Midlands(GB)**

(74) Representative: **Cowan, David Robert et al,**
**WALFORD AND HARDMAN BROWN Trinity House Hales**
**Street**
**Coventry CV1 1NP West Midlands(GB)**

(54) Tool holder and cutting tool for use with the tool holder.

㊼ A tool holder and cutting tool combination is for machine tools, the tool holder being mounted on the spindle.

The tool holder 10 has an internal tapered opening 17 and an external screw-threaded portion 22. A nut 28 which engages with the screw-threaded portion holds the cutting tool 32 in the holder via further screw threads 30 on the nut which are of a different pitch to the screw threads on the tool holder.

In one form of the invention the nut 28 engages directly with screw threads on the cutting tool 32 and the tool shank 19 seats in the tapered opening 17 in the body 10.

When using a collet 51' to hold the tool 40' a sleeve 44' is located in the tapered opening 16' in the body 10' and the nut 42' is in screw-threaded engagement with the sleeve 44'. The collet 51' is located within the sleeve and the tool shank is received in the collet and is in screw-threaded engagement therewith.

FIG.1

TOOL HOLDER AND CUTTING TOOL FOR USE WITH THE TOOL HOLDER.

This invention relates to a tool holder or chuck and a cutting tool for use with the tool holder.

Many different arrangements have been proposed for holding cutting tools in tool holders but present tool holders suffer from the disadvantage that they do not combine the characteristics of high accuracy of cut of the associated cutting tool with easy release of the tool from the holder and easy loading of the tool into the holder across a wide range of applications and torque loadings in an economical manner.

It is known, for example in British Patent specifications 678,873 and 1,257,777, to hold a cutting tool in a tool holder incorporating a collet by the use of a nut which is in screw-threaded engagement with the tool holder body and with the collet, the nut having screw threads of different pitch for engaging the body and the collet, release of the tool from the holder being achieved by rotation of the nut. However such an arrangement has required a collet to lock the tool in the holder and even in cases where collets are required the collet can become locked relative to the tool and hinder release of the tool.

Accordingly the object of the invention is to provide an improved tool and tool holder combination which is adaptable for use in collet chucks.

According to the invention a tool holder and cutting tool combination comprises a tool holder having a body with at one end an internal tapered opening and an external screw-threaded portion; a cutting tool having a shank for location in the body, the shank including a tapered portion to be received in the tapered opening in the body and a screw-threaded portion; and a nut member having a first screw-threaded portion arranged for screw-threaded engagement with the screw-threaded portion of the holder body and a second screw-threaded portion for screw-threaded engagement
with the screw-threaded portion of the cutting tool shank, the
first and second screw-threaded portions being of different pitch.

Due to the tapered, non-stick seating of the tool shank in the
holder the tool is always accurately centred in the holder.
The use of the differential thread nut enables the tool to be
readily located in the holder and release of the tool is achieved
simply by unscrewing the nut.    The cutting tool for use in the
combination is simple to make requiring only a tapered end and a
screw thread adjacent the tapered end in addition to the
conventional cutting portion at the opposite end.

The principle of the invention can be adopted for use with straight
shank cutting tools to be held in by a collet and for this purpose
there is provided an externally tapered sleeve member seating in
the tapered opening in the body.    The nut is engageable with the
externally threaded portion of the sleeve member.    The collet is
located within the sleeve through a seating which is of reversed
taper compared with the external taper of the sleeve member.    The
collet has an opening in which the shank of the cutting tool is
arranged to screw-threadedly engage.

To avoid any difficulty of disengaging the shank from the collet
due to the sleeve and collet moving together upon rotation of
the nut, the collet may be retained relative to the tool body by
collet retaining means.

Further features of the invention will appear from the following
description of embodiments of the invention given by way of example
only and with reference to the drawings in which:

Fig. 1 is a side elevation, partly in section, of one embodiment
of a tool and tool holder combination,

Fig. 2 is a similar view to that of Fig. 1 of a second embodiment of the invention,

Fig. 3 is a longitudinal section through an embodiment of tool holder incorporating a collet,

Fig. 4 is a similar view to that of Fig. 3 of a further embodiment incorporating a collet and fitted with a cutting tool and ready for use, and

Fig. 5 is a view corresponding to Fig. 4 of part of the tool holder during location of the tool in the holder.

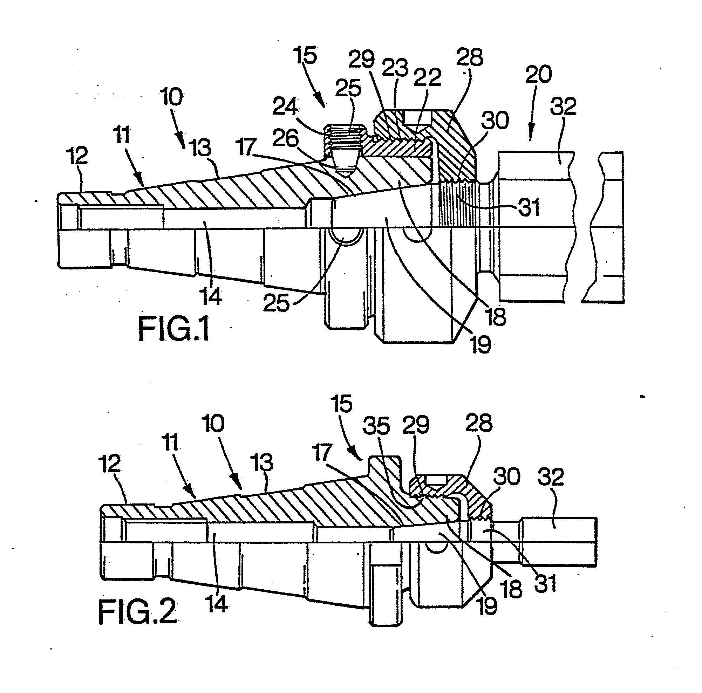

Referring to Fig. 1 a tool holder or chuck includes a body 10 which at one end 11 is of a form for location in a spindle (not shown) of a machine tool. The body has a cylindrical portion 12, a tapered portion 13 and a longitudinal bore 14.

At the other end 15 of the body a circular-section, tapered opening 17 is provided in a generally cylindrical portion 18. The taper 17 is at an angle such as to provide a non-sticking taper in which is received a correspondingly-tapered shank 19 of a cutting tool 20.

Around the cylindrical portion 18 is located a sleeve 22 having towards one end an outer screw-threaded portion 23 and towards the opposite end radial holes 24, in this case four holes, equally spaced around the sleeve in which holes are received screws 25. The holes 24 in the sleeve 22 are aligned with tapered sockets 26 in the cylindrical portion 18 so that upon partial release of the screws 25 the sleeve 22 is free to be moved axially of the body 10.

A coupling member 28 in the form of a nut has an annular internally screw-threaded portion 29 which is arranged for screw-threaded engagement about the sleeve 22 with portion 23. The nut 28 also has an opening 30 of smaller diameter than the annular portion 29, the opening 30 being screw-threaded for screw-threaded engagement with a screw-threaded portion 31 of the shank 19 of the cutting tool 20.

The screw threads on the portion 29 of the nut are of coarser pitch than the screw threads on the opening 30 and the screw-threaded portion of the shank 19 is spaced from but adjacent the wider end of the tapered portion of the shank 19.

The cutting tool 20 has a cutting portion 32 of the desired form adjacent the screw-threaded portion.

In loading the cutting tool 20 into the holder the nut 28 is first screwed onto the screw-threaded portion 31 of the shank 19 to the position shown, the tool shank 18 is then inserted into the tapered opening 17 of the body 10 and the nut 29 is rotated about the sleeve 22 with the sleeve locked in position by the screws 25 so that the screw-threaded portions 22 and 23 engage and the nut is held on the body 10 with the tapered portions of the shank 19 and the body firmly engaged with one another.

The spindle can then be rotated to operate the cutting tool. On applying torque to the cutting tool 20 the tool rotates somewhat relative to the nut 29 causing the coarser threads on the nut to sleeve connection to be put under axial loading.

In releasing the tool 20 from the holder 10 rotation of the nut 29 releases the nut from the sleeve 22 and after release the nut and tool are unscrewed from one another. However, if the nut and sleeve connection is difficult to release due to high torque loading on the tool giving rise to high axial loading on the threads, the screws 25 securing the sleeve 22 are loosened to release the sleeve for axial movement relative to the body 10. This frees the screw-threaded engagement of the nut to the sleeve for rotation of the nut and release of the tool.

Referring to Fig. 2 a similar form of tool holder and tool combination is shown to that of Fig. 1 and the same reference numbers are used for similar parts in the two embodiments. The two embodiments differ primarily in that in the Fig. 2 arrangement the sleeve 22 and screws 25 are omitted and the screw-threaded portion 29 of the nut 28 is in direct screw-threaded engagement with a threaded portion 35 of the body 10. As in the previous embodiment the screw-threaded portion 29 has a coarser pitch than the screw threads in the opening 30 to provide differential threads.

In the Fig. 2 embodiment there is no facility, as in the Fig. 1 embodiment, for relieving the axial loading on the nut 28 to screw threaded portion 35 but it has been found that in many applications it is possible to release the nut without such means.

The tool holder and cutting tool combination gives rise to several advantageous characteristics. The parts are simple and economical to manufacture and can be made in a wide variety of sizes for use with cutting tools for a wide variety of applications. The cutting tools are capable of a high accuracy of cut due to the direct tapered seating of the shank of the tool in the tool holder and this arrangement is also capable of more efficient cutting operations, especially at high torque loadings. The use of a non-sticking taper seating, made possible by threaded drive connection between the holder and the tool, enables easy release of the tool from the holder. At higher torque loadings release of the tool may be simply effected by the provision of the sleeve of the Fig. 1 embodiment but, if desired, the sleeve may be omitted, as in the Fig. 2 embodiment, and the nut arranged for direct screw-threaded engagement with threads formed on the outer surface of the holder body. The cutting tool is also easily loaded into the tool holder from one end of the holder.

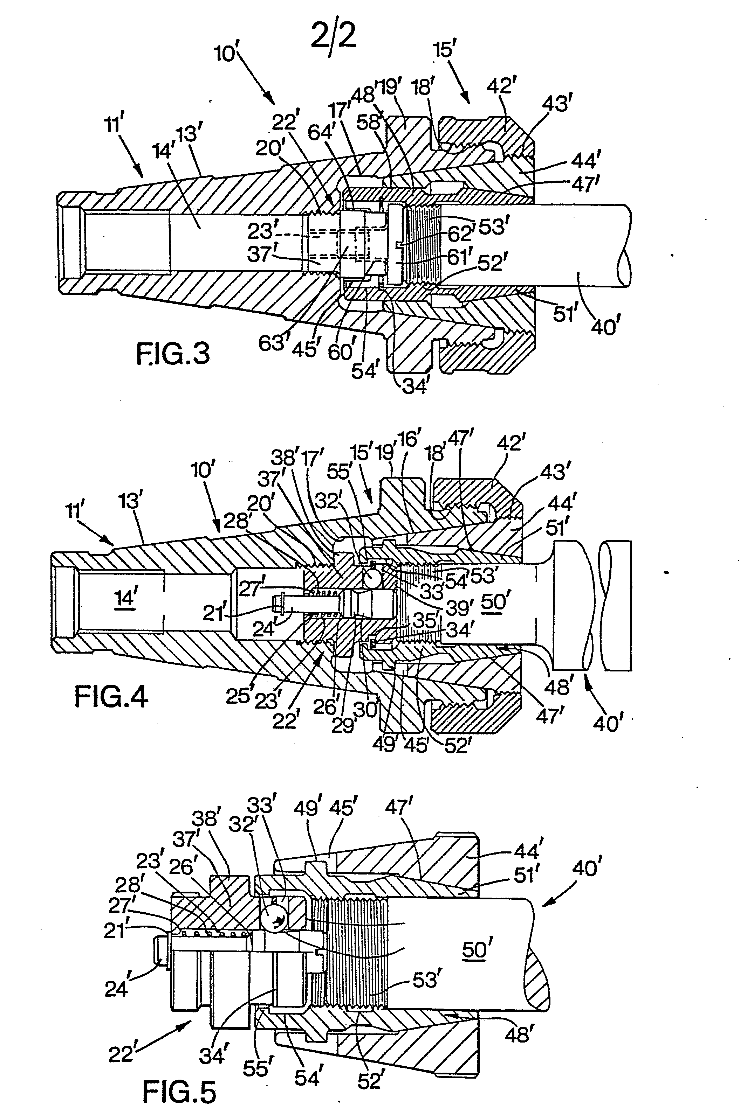

Referring now to Fig. 3 of the drawings a tool holder or chuck includes a body 10' which at one end 11' is of a form for location in a spindle (not shown) of a machine tool. The body 10' has a tapered portion 13' and a longitudinal bore 14'.

At the other end 15' of the body an internal opening is formed with a non-sticking (international) tapered portion 16' extending into a part-cylindrical recessed portion 17', the portion 16' tapering inwards from the end 15'. Externally of the portion 16' at the end 15' of the body is formed a screw-threaded portion 18' adjacent an outwardly projecting portion 19' formed to be engageable by a spanner or the like.

The bore or opening 14' is screw-threaded over its portion 20' adjacent the recessed portion 17' to locate a collet retaining assembly 22' including a body 37'. The body 37' has a central opening 23' one end of which is screw-threaded at 60' to receive a lock screw 61'. Around the body 37' at its opposite end is formed a screw-threaded portion to engage with the portion 20' of the body. Over the central portion 62' of the body 37' are formed alternating outwardly-projecting, part annular portions 63' and chordal flat portions 64'. The part-annular portions 63' provide abutments which engage an end wall of the recess 17' when the body 37' is fully engaged in the body 10'.

A nut 42' is in screw-threaded engagement with the screw-threaded portion 18' of the body, the threads of the portion 18' being of relatively coarse pitch. The nut 42' is also formed with a screw-threaded portion 43', of relatively fine pitch, which engages with corresponding threads formed on a tapered sleeve 44'. The sleeve 44' has an outer tapered surface which is received in the tapered portion 16' of the body. The sleeve 44' is also formed with an inner non-sticking tapered surface 47' over its outer end of opposite taper to its outer tapered surface. The remainder of the inner surface of the sleeve 44' is cylindrical as at 58'.

The sleeve 44' receives a collet 48' having over its outer end a taper cooperating with the tapered surface 47' of the sleeve, the tapered surface tapering inwardly towards the outer end 15' of the holder in which a cutting tool 40' (only the shank of which is seen) is located. Rotation of the collet 48' relative to the sleeve 44' is prevented by the portions 63' of the body 37' being located in slots 45' defined between lugs or ears on the collet 48' which allows limited relative axial movement between the collet 48' and body 37' but not rotational movement.

The collet 48' is, in conventional manner, formed over its outer portion with three integral circumferentially-spaced portions 51' capable of flexing in and out to accommodate and engage the shank of the tool 40'.    Inwardly of the portions 51' the collet is formed with an internal thread 52' in which is received a threaded portion 53' of the tool shank.    A circumferential recess 54' is formed inwardly of and adjacent the threaded portion 52' of the collet and in the recess 54' is formed a groove in which is located a circlip 34' inwardly directed and providing a stop or abutment member engageable with the lock screw 61', as will be described.

As shown the tool holder is in a fully assembled condition with a cutting tool 40'.    The tool shank is gripped by the collet 48' and is in screw-threaded engagement therewith.    The lock-screw 61' is located in the body 37' and provides a seating for the end of the tool shank, and the circlip 34' is located behind the outwardly-projecting edge of the lock screw 61'.

The nut 42' is engaged with the end of the body 10' and with the sleeve 44'.    Due to the use of opposite tapers between the sleeve 44' and the body 10' and between the sleeve 44' and the collet 48', the tool 40' is accurately centred on the tool holder against movement relative to the holder.

When it is desired to release the tool 40' from the holder the nut 42' is rotated by a spanner or the like.    Due to the differential threads between the nut 42' and the body 10' and between the nut 42' and the sleeve 44', the nut is unscrewed relative to the body 10' and the sleeve is withdrawn outwardly relative to the body.    However, due to the engagement of the sleeve with the collet 48 the collet moves outwards with the sleeve thereby preventing ready release of the tool 40' from the collet until the circlip 34' engages the rear face of the lock screw 61'. This prevents further outward axial movement of the collet so that the sleeve disengages from the collet over the tapered portion 47'. This action in turn takes the tension off the threaded connection 52' between the tool shank and the collet 48' and the tool 40' can be readily rotated to release the tool from the holder.

To replace the tool 40' in the holder the nut 42' is tightened back onto the body 10' and the tool shank is screwed back into the collet 48'. The torque on the tool 40' during operation causes the collet 48' to more firmly grip the shank of the tool.

If it is desired to change the collet the lock screw 61' is released from the body 37' by applying a screw driver to a slot 66' formed in the screw and rotating the screw to release the screw from the body 37'. The screw and the collet can then be removed and replaced by a further collet. After location of the further collet the nut 42' and sleeve 44' are relocated on the body so that the holder is again ready to receive a tool in the collet.

Referring now to Figs. 4 and 5 of the drawings the tool holder or chuck includes a body 10' which at one end 11' is of a form for location in a spindle (not shown) of a machine tool. The body 10' has a tapered portion 13' and·a longitudinal bore 14' and in this embodiment the same reference numbers are used for similar parts to the Fig. 3 embodiment.

At the other end 15' of the body an internal opening is formed with a non-sticking, (international taper) tapered portion 16' extending into a part-cylindrical recessed portion 17', the portion 16' tapering inwards from the end 15'. Externally of the portion 16' at the end 15' of the body is formed a screw-threaded portion 18' adjacent an outwardly projecting portion 19' formed to be engageable by a spanner or the like.

The bore or opening 14' is screw-threaded over its portion 20' adjacent the recessed portion 17' to locate a collet retaining assembly 22' having a body 37'. The assembly 22' has a central opening 23' in which is located a plunger 24' and the plunger is spring-biased by a spring 25' towards the position shown in Fig. 5 of the drawings. The spring 25' is retained between a shoulder 26' on the plunger and a shoulder 27' on the opening 23' in a space 28' between the plunger and the opening. A circlip 21 is located around one end of the plunger 24' to restrict its outward movement.

The plunger 24' is also formed with surfaces 29' and 30' inclined to the axis of the plunger which surfaces 29' and 30' act as a seating for balls 32' and to cause the balls 32 to move radially inwards and outwards along radial bores 33' as the plunger is moved in its axial direction between the positions shown in Figs. 4 and 5. The balls 32' and associated bores 33' are located at $120^{o}$ to each other about the axis of the plunger. Around the balls 32' extends a circlip 34' which lies along a circumferential groove 35' and passes over the axes of the bores 33'. The circlip 34' provides a detent which is movable in and out relative to the axis of the plunger upon engagement by the balls 32' so that when the balls are in their radially inner position the circlip 34' lies in the groove 35' and does not protrude beyond the wall of the body 37' of the assembly 22'. The circlip 34' acts as an abutment member, as will be described.

The body 37' is screw-threaded to locate in the screw-threaded portion 20' of the opening 14' and an outwardly directed portion 38' of the body 37' provides an abutment which engages an end wall of the recess 17' when the assembly 22' is fully engaged in the body 10'. An annular face 39' of the body 37' provides a seating for an end of the cutting tool 40 mounted in the holder.

A nut 42' is in screw-threaded engagement with the screw-threaded portion 18' of the body, the threads of the portion 18' being of relatively coarse pitch. The nut 42' is also formed with a screw-threaded portion 43' of relatively fine pitch which engages with corresponding threads formed on a tapered sleeve 44'. The sleeve 44' has an outer tapered surface which is received in the tapered portion 16' of the body 10' and the inner end of the sleeve is formed with axially extending slots 45'. The sleeve 44' is also formed with an inner non-sticking tapered surface 47' over its outer end, the remainder of the inner surface of the sleeve being cylindrical.

The sleeve 44' receives a collet 48' having over its outer end a taper cooperating with the tapered surface 47' of the sleeve, the tapered surfaces tapering inwardly towards the outer end 15' of the holder in which the cutting tool 40' is located. Towards the inner end of the collet 48 are formed outwardly projecting lugs 49' which are received in the slots 45' in the sleeve thereby preventing relative rotation between the collet 48' and the sleeve 44'.

The collet 48 is, in conventional manner, formed over its outer portion with three integral circumferentially spaced portions 51' capable of flexing in and out to accommodate and engage the shank 50' of the tool 40'. Inwardly of the portions 51' the collet is formed with an internal thread 52' in which is received a threaded portion 53' of the shank 50'. A circumferential recess 54' is formed inwardly of and adjacent the threaded portion 52' of the collet and the inner end of the recess 54' is formed by an abutment 55'. The circlip 34' of the collet retaining assembly 22 is located in the recess 54' when in the outwardly located position of the circlip and the circlip is engageable with the abutment 55' in a position in which the circlip is restraining outward movement of the collet 48'.

In Fig. 4 the body 10' and cutting tool 40' are shown in their fully assembled operating position in which the tool shank 50' is gripped by the collet 48' and is in screw-threaded engagement with the collet. The plunger 24' is fully depressed to cause the balls 32' to urge the circlip 34' outwardly into the recess 54' and the inner end of the tool shank 50' is seated on the end of the body 37'.    Moreover the nut 42' is engaged with the end of the body 10' and with the sleeve 44'.    Due to the use of opposite tapers between the sleeve 44' and the body 10' and between the sleeve 44' and the collet 48', the tool 40' is accurately centred on the tool holder against movement relative to the holder.

When it is desired to release the tool 40' from the holder the nut 42' is rotated by a spanner or the like.    Due to the differential threads between the nut 42' and the body 10' and between the nut 42' and the sleeve 44', the nut is unscrewed relative to the body 10' and the sleeve is withdrawn outwardly relative to the body.    However due to the engagement of the sleeve with the collet 48' the collet moves outwards with the sleeve  thereby preventing ready release of the tool 40' from the collet until the abutment 55' on the collet engages with the circlip 34' in its outwardly extended position.    This prevents further axial movement of the collet with the sleeve thereby disengaging the collet from the sleeve over the tapered portion 47'. This action in turn takes the tension off the threaded connection 52' between the tool shank 50' and the collet 48' and the tool 40' can be readily rotated to release the tool from the holder.

As the tool is withdrawn from the holder the plunger 24' is urged outwards enabling the balls 32' and the circlip 34' to move radially inwards so that, if required the collet can be removed from the holder upon release of the nut 42'.

For location of a tool in the holder the nut 42 is engaged on the sleeve 44' and the collet 48' is located within the sleeve and the nut is then engaged over the end 15' of the tool holder body 10'. The tool shank 50' is then screwed into the collet 48' depressing the plunger until the shank engages the end 39' of the body 37' and then causes the collet to move outwardly relative to the sleeve so that the collet grips the tool shank 50' due to the converging taper 47' on the sleeve 44'.    The shank 50' is thus firmly gripped without any unequal distorsion of the collet and in a manner allowing ready release of the tool, as previously described.

It will be appreciated that the collet can be replaced with collets having different sized openings for receiving different sized tools 40'. Moreover the collet retaining means can take different forms from that illustrated and described.

CLAIMS

1. A tool holder and cutting tool combination comprising a tool holder having a body (10) with at one end (15, 15') an internal tapered opening (17, 16') and an external screw-threaded portion (23, 18'), a cutting tool (32, 40') having a shank (19) for location in the body (10), and a nut member (28, 42') having first and second screw-threaded portions (29 and 30) of different pitch the first screw-threaded portion (29) being engaged with the external screw-threaded portion of the tool holder body (10); characterised in that the tool shank (19) has a tapered portion to be received in the tapered opening (17) in the body (10) and a screw-threaded portion (31) for screw-threaded engagement with the second screw-threaded portion (30) of the nut member (28).

2. A combination according to claim 1 characterised in that the tool body (10) is externally tapered (13) towards the end (11) opposite to said one end (15) and the body has a longitudinal opening (14) communicating with said tapered opening (17) for location of the body on a machine tool spindle.

3. A combination according to claim 1 or 2 characterised in that the first screw-threaded portion (29) is of larger diameter and coarser pitch than the second screw-threaded portion (30) and the screw-threaded portion (31) of the cutting tool (32) is spaced from the tapered portion of the shank (19).

4. A combination according to claim 1, 2 or 3 characterised in that a sleeve (22) is releasably located about said one end (15) of the tool holder body (10), the sleeve being formed with a screw-threaded portion (23) engageable with the first screw-threaded portion (29) of the nut (28).

5. A tool holder and cutting tool combination comprising a tool holder having a body (10') with at one end (15') an internal tapered opening (16') and an external screw-threaded portion (18'), a cutting tool (40') having a shank for location in the body (10'), an externally tapered member (44') seating in the tapered opening in the body and having an externally screw-threaded portion, and a nut member (42') engageable with the screw-threaded portion (18') of the body (10') and with the screw-threaded portion of the tapered member (44'), said portions being of different pitches; characterised by a collet member (51') located within a seating (47') in the tapered member (44'), the seating having a taper which is reversed compared with the external taper of the member (44'), the member (44') being in the form of a sleeve member, the collet member (51') having an opening with a screw-threaded portion (52'), and the cutting tool shank having a screw-threaded portion (53') which engages with the screw-threaded portion of the collet member (51').

6. A combination according to claim 5 characterised by collet retaining means operative to retain the collet member (51') against outward movement with the sleeve member (44') upon release of the nut (42') from the tool body (10') to enable the cutting tool (40') to be unscrewed from the collet member.

7. A combination according to claim 6 characterised in that the collet retaining means includes an abutment member (34') on the collet member (51'), the collet member being arranged for limited movement relative to the body (10') axially of the body.

8. A combination according to claim 6 or 7 characterised in that the collet retaining means includes a releasable abutment member (61') carried centrally on the tool body and projecting radially outwardly into the path of inwardly projecting abutment means (34') on the collet member (51').

- 15 -                                    0048578

9.  A combination according to claim 7 or 8 characterised in that the abutment member (61') is releasably attached to the tool body (10') to allow removal of the collet member (51') from the tool and the abutment member also serves as an abutment for the inner end of the cutting tool (40').

10.  A combination according to claim 8 characterised in that the abutment member (34') is urged outwardly into the path of the abutment means (55) upon engagement of the inner end of the cutting tool (40') with a plunger (24') axial movement of which is communicated to the abutment member (34').

FIG.1

FIG.2

2/2

FIG.3

FIG.4

FIG.5

0048578